# EUROPÄISCHE PATENTANMELDUNG

(11) **EP 4 647 534 A1**
(43) Veröffentlichungstag der Anmeldung: **12.11.2025**
(21) Anmeldenummer: 25157706.0
(22) Anmeldetag: 13.02.2025
(51) Int. Cl.: C25B 1/04, C25B 9/67, C25B 9/75, C25B 9/77, C25B 11/031, C25B 11/052, C25B 15/021, C25B 15/027, H01M 8/0258, H01M 8/0267

(54) **PLATTENANORDNUNG, ELEKTROLYSEUR UND VERFAHREN ZUR HERSTELLUNG EINER PLATTENANORDNUNG**

(30) Priorität: 06.05.2024 DE 102024112692
(71) Anmelder: Schaeffler Technologies AG & Co. KG, 91074 Herzogenaurach (DE)
(72) Erfinder: Schaeperkoetter, Claus, 91058 Erlangen (DE); De Brouwer, Benno, 52146 Würselen (DE)
(74) Vertreter: Schaeffler Technologies

(57) **Zusammenfassung**

Eine Plattenanordnung (1) eines Stapels elektrochemischer Zellen (2) umfasst ein zumindest teilweise als 3D-Druck-Element ausgebildetes Plattenelement (3), in welchem mehrere Schichten (6, 7, 8) parallel zueinander angeordnet sind, die jeweils durchbrochene, zur Durchleitung eines Fluids geeignete Strukturen aufweisen, wobei die Feinheit der Durchbrechungen (17) von Schicht (6, 7, 8) zu Schicht (6, 7, 8) variiert, und wobei ein Temperatursensor (19), der an ein Kabel (20) angeschlossen ist, welches durch mehrere der genannten Schichten (6, 7, 8) verläuft, an diejenige Schicht (8) grenzt, welche die feinsten Durchbrechungen (17) aufweist.

## Beschreibung

Die Erfindung betrifft eine für die Verwendung in einem Stapel elektrochemischer Zellen vorgesehene Plattenanordnung, welche mindestens einen Temperatursensor umfasst. Ferner betrifft die Erfindung einen Elektrolyseur mit einer solchen Plattenanordnung und ein Verfahren zur Herstellung einer Plattenanordnung.

Ein elektrochemisches System, nämlich Brennstoffzellensystem, ist beispielsweise in der WO 2016/116185 A1 offenbart. Dem Brennstoffzellensystem sind unter anderem ein Anodenfluidsystem und ein Kathodenfluidsystem zuzurechnen. Ferner umfasst das Brennstoffzellensystem nach der WO 2016/116185 A1 eine Vorrichtung zur Messung der Temperatur eines Fluids im Kathodenfluidsystem. Darüber hinaus können ein Massenstromsensor und ein Drucksensor als Messvorrichtungen vorhanden sein. Die Messvorrichtungen sollen zusammen mit einer Steuerungsvorrichtung eine geeignete Befeuchtung des Kathodenfluids sicherstellen.

Ein Verfahren zum Herstellen eines Brennstoffzellenstapels ist zum Beispiel in der DE 10 2013 108 413 A1 beschrieben. Im Rahmen dieses Verfahrens werden mehrere Bauteile hergestellt, welche jeweils eine Gaskanalstruktur umfassen. Es wird vorgeschlagen, die Gaskanalstrukturen durch ein generatives Verfahren, insbesondere mittels Laser-, Elektronenstrahl- oder Wasserdampfstrahlsintern, herzustellen.

Aus der WO 2020/009572 A1 ist zur Herstellung von Wasserstoff und Sauerstoff vorgesehenes Elektrolyse-System bekannt, das ein Elektrodenarray umfasst. Dieses Elektrolyse-System weist in einer matrixförmigen Elektrodenanordnung Kathoden sowie eine Vielzahl säulenförmiger Anoden auf. Als mögliche Elektrodenmaterialien sind unter anderem Metalle, beispielsweise Platin, Iridium, Nickel oder Kupfer, Graphit und Halbleiter genannt.

Der Erfindung liegt die Aufgabe zugrunde, gegenüber dem Stand der Technik weiterentwickelte Möglichkeiten der Temperaturmessung in stapelförmig aufgebauten elektrochemischen Systemen anzugeben, wobei eine hohe Aussagekraft der Messung bei zugleich geringem Platzbedarf angestrebt wird.

Diese Aufgabe wird erfindungsgemäß gelöst durch eine Plattenanordnung mit den Merkmalen des Anspruchs 1. Die Plattenanordnung ist insbesondere für die Verwendung in einem Elektrolyseur nach Anspruch 5 geeignet. Ebenso wird die Aufgabe gelöst durch ein nach Anspruch 8 gestaltetes Verfahren zur Herstellung einer Plattenanordnung für einen Stapel elektrochemischer Zellen, insbesondere Elektrolysezellen zur Herstellung von Wasserstoff aus Wasser. Im Folgenden im Zusammenhang mit dem Herstellungsverfahren erläuterte Ausgestaltungen und Vorteile der Erfindung gelten sinngemäß auch für die Vorrichtungen, das heißt den Elektrolyseur sowie die Plattenanordnung, und umgekehrt.

Die für die Verwendung in einem Stapel elektrochemischer Zellen, insbesondere Elektrolysezellen, bestimmte Plattenanordnung umfasst ein zumindest teilweise als 3D-Druck-Element ausgebildetes Plattenelement, in welchem mehrere Schichten parallel zueinander angeordnet sind, die jeweils durchbrochene, zur Durchleitung eines Fluids geeignete Strukturen aufweisen, wobei die Feinheit der Durchbrechungen von Schicht zu Schicht variiert, und wobei ein Temperatursensor, der an ein Kabel angeschlossen ist, welches durch mehrere der genannten Schichten verläuft, an diejenige Schicht grenzt, welche die feinsten Durchbrechungen aufweist.

Was Gestaltungmöglichkeiten eines Temperatursensors betrifft, wird beispielhaft auf die DE 10 2013 102 398 A1 hingewiesen, die einen thermischen Strömungssensor zur Bestimmung eines Gases oder der Zusammensetzung eines Gasgemisches zum Gegenstand hat.

Ergänzend wird auf die DE 10 2020 134 440 A1 hingewiesen, die sich mit Widerstandsstrukturen befasst, welche als Heizelement und/oder als Temperatursensor dienen können. Hierbei können sich verschiedene Widerstandsstrukturen auf unterschiedlichen Flächenbereichen eines Trägersubstrats befinden. Als mögliche Herstellverfahren sind in der DE 10 2020 134 440 A1 unter anderem PVD-Verfahren, CVD-Verfahren sowie additive Verfahren genannt.

Innerhalb der anmeldungsgemäßen Plattenanordnung nimmt die durch verschiedene Schichten verlaufende Zuführung des Sensors lediglich einen geringen Bauraum, verglichen mit den gesamten Abmessungen des die Plattenanordnung umfassenden Stapels elektrochemischer Zellen, in Anspruch. Zugleich spricht der Temperatursensor aufgrund seiner Anordnung an oder in der am feinsten strukturierten Schicht besonders sensibel auf Temperaturänderungen in der elektrochemischen Zelle, welcher die betreffende Schicht zuzurechnen ist, an. Ausnehmungen für den Temperatursensor sowie das zugehörige Kabel sind rationell im Zuge der generativen Fertigung des Plattenelementes herstellbar.

Die Durchbrechungen, welche sich in den einzelnen Schichten befinden, können grundsätzlich in einem gleichförmigen Muster oder in ungleichförmiger Verteilung angeordnet sein. Ebenso kann die Querschnittsform und -größe der Durchbrechungen einheitlich oder uneinheitlich sein. Der mittlere Abstand, in einem Querschnitt betrachtet, zwischen dem Mittelpunkt einer Durchbrechung und dem Mittelpunkt einer benachbarten Durchbrechung wird als Teilung der durchbrochenen Struktur der betreffenden Schicht bezeichnet. Im Fall derjenigen additiv gefertigten Schicht, welche mit der gröbsten Teilung durchbrochen ist, ist mindestens eine Durchbrechung beispielsweise als Kühlmittelkanal ausgebildet. Der Kühlmittelkanal erstreckt sich insbesondere parallel zu den Ebenen, in welchen die Schichten des Plattenelementes liegen, und kann eine Mehrzahl zueinander paralleler Abschnitte aufweisen, welche strömungstechnisch entweder in Reihe oder parallel zueinander geschaltet sein können.

Zusätzlich zur Schicht, welche den Kühlmittelkanal bereitstellt, sind beispielsweise mindestens zwei weitere Schichten vorhanden, die im Vergleich zur erstgenannten Schicht in vergleichsweise fein strukturierter Weise durchbrochen sind.

Gemäß verschiedener möglicher Ausgestaltungen ist die am feinsten strukturierte Schicht des Plattenelementes von einer katalytisch beschichteten Membran bedeckt. Bei der Membran handelt es sich insbesondere um eine Protonenaustauschmembran. Im Zusammenhang mit solchen für die Verwendung in elektrochemischen Zellen vorgesehenen Membranen wird beispielhaft auf die Dokumente DE 10 2014 213 990 A1 und DE 11 2005 000 823 B4 hingewiesen.

Der anmeldungsgemäße Elektrolyseur umfasst mindestens eine Plattenanordnung nach Anspruch 1, insbesondere eine Mehrzahl solcher Plattenanordnungen. Jede der Plattenanordnungen kann ein einziges Plattenelement der in Anspruch 1 angegebenen Art oder zwei derartige Plattenelemente aufweisen. Im letztgenannten Fall handelt es sich um ein anodenseitiges und ein kathodenseitiges Plattenelement. In jedem Fall kann der mindestens eine durch die Plattenanordnung nach Anspruch 1 bereitgestellte Temperatursensor zur Erfassung der Temperatur eines einer elektrochemischen Zelle zuzurechnenden Aktivfeldes, das heißt eines insgesamt flächigen Bereiches, in welchem elektrochemische Reaktionen ablaufen, vorgesehen sein.

Das abmeldungsgemäße Verfahren zur Herstellung einer Plattenanordnung für einen Stapel elektrochemischer Zellen, insbesondere Elektrolysezellen, zeichnet sich allgemein dadurch aus, dass ein Plattenelement durch ein additives Verfahren erzeugt wird, indem durchbrochene Schichten unterschiedlicher Poren- oder Durchbrechungsgröße aufgebaut werden, wobei eine mehrere Schichten durchziehende Ausnehmung freigehalten wird, die zur Aufnahme eines Temperatursensors geeignet ist, welcher an die mit den kleinsten Poren oder Durchbrechungen versehene Schicht grenzt.

Das Plattenelement kann grundsätzlich materialeinheitlich oder materialuneinheitlich aufgebaut sein. Als Materialien zur generativen Fertigung des Plattenelementes kommen metallische Werkstoffe sowie nichtmetallische Werkstoffe, insbesondere Kunststoffe, in Betracht.

Unabhängig von der Werkstoffwahl können Schichten unterschiedlicher Poren- oder Durchbrechungsgröße simultan aufgebaut werden. Was die Durchbrechungen in der am feinsten strukturierten, das heißt mit den kleinsten Durchbrechungen versehenen Schicht betrifft, so sind, ebenso wie in den anderen Schichten, unterschiedliche Fertigungsverfahren denkbar. Zum einen ist es möglich, die Durchbrechungen unmittelbar im Zuge der generativen Fertigung herzustellen. Zum anderen können insbesondere sehr kleine Durchbrechungen auch nachträglich durch mechanische oder sonstige Bearbeitung, beispielsweise durch Ätzen oder per Laser, erzeugt werden.

Nachfolgend werden mehrere Ausführungsbeispiele der Erfindung anhand einer Zeichnung näher erläutert. Hierin zeigen:
- Fig. 1: eine Plattenanordnung für ein elektrochemisches System, nämlich einen Elektrolyseur, in Explosionsdarstellung,
- Fig. 2: eine Draufsicht auf Komponenten einer gegenüber Figur 1 abgewandelten Plattenanordnung für ein elektrochemisches System,
- Fig. 3: Komponenten der Plattenanordnung nach Figur 2 in geschnittener Darstellung,
- Fig. 4: ein Detail der Anordnung nach Figur 3,
- Fig. 5: Komponenten einer kathodenseitigen Halbzelle einer weiteren Plattenanordnung für einen Elektrolyseur,
- Fig. 6: Komponenten einer anodenseitigen Halbzelle des Elektrolyseurs, welcher unter anderem die Komponenten nach Figur 5 umfasst,
- Fig. 7: einen Ausschnitt aus Figur 6.

Die folgenden Erläuterungen beziehen sich, soweit nicht anders angegeben, auf sämtliche Ausführungsbeispiele. Einander entsprechende oder prinzipiell gleichwirkende Teile sind in allen Figuren mit den gleichen Bezugszeichen gekennzeichnet.

Eine Plattenanordnung 1 ist einem insgesamt mit 10 bezeichneten Elektrolyseur, das heißt einem elektrochemischen System, zuzurechnen. Der Elektrolyseur 10 ist zur Herstellung von Wasserstoff aus Wasser vorgesehen und in an sich bekannter Grundkonzeption aus einer Anzahl stapelförmig angeordneter elektrochemischer Zellen 2, das heißt Elektrolysezellen, aufgebaut. Hinsichtlich der prinzipiellen Gestaltung und Funktion des elektrochemischen Systems 10 wird auf den eingangs zitierten Stand der Technik verwiesen.

Der Plattenanordnung 1, welche kurz auch als Stack bezeichnet wird, ist ein als 3D-Druck-Element gefertigtes Plattenelement 3 zuzurechnen, welches einteilig oder mehrteilig, nämlich aus Plattenteilen 4, 5 aufgebaut sein kann. Die Druckrichtung (z-Richtung), in welcher das Plattenelement 3 aufgebaut, das heißt generativ gefertigt, wird, ist mit DR bezeichnet. Das Plattenelement 3 weist eine Dicke DP auf. In den Ausführungsbeispielen ist das Plattenelement 3, ebenso wie die übrigen flächigen Komponenten der Plattenanordnung 1, vertikal ausgerichtet.

Das Plattenelement 3, gegebenenfalls jedes der Plattenteile 4, 5, umfasst mehrere nicht massive Schichten 6, 7, 8, welche sich hinsichtlich der Art und Größe von Hohlräumen, die in den Schichten 6, 7, 8 gegeben sind, stark voneinander unterscheiden, wie im Folgenden noch näher beschrieben wird.

Zusätzlich zu mindestens einem Plattenelement 3 umfasst die Plattenanordnung 1 eine katalytisch beschichtete, protonendurchlässige Membran 9 und eine Gasdiffusionslage 11, welche in den vorliegenden Fällen als Filz aus Kohlenstofffasern ausgebildet ist. Endplatten des Stacks 1 sind mit 12, 13 bezeichnet. Dichtungen 14 kontaktieren, ein Aktivfeld des Elektrolyseurs 1 umschließend, jeweils eine Membran 9. Dichtungen 15 sind zur Abdichtung von Ports 16 vorgesehen, durch welche Betriebs- oder Kühlmedien geleitet werden. Die Endplatten 12, 13 sind ebenso wie das Plattenelement 3 als 3D-Druckteile ausgebildet, das heißt generativ gefertigt.

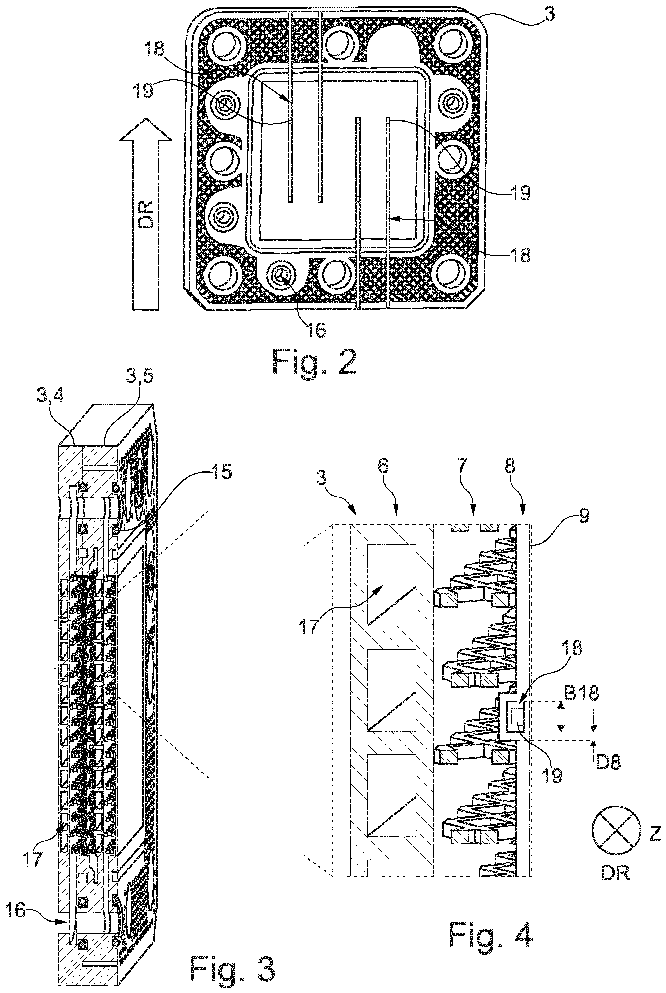

Details zum Aufbau des Plattenelementes 3 aus den Schichten 6, 7, 8 gehen unter anderem aus Fig. 4 hervor. Die am gröbsten strukturierte Schicht 6 weist durch Durchbrechungen 17 in Form von Kühlmittelkanälen mit rechteckigem Querschnitt auf. Das Kühlmedium ist von dem Betriebsmedien des Elektrolyseurs 10 getrennt. Dies heißt, dass Kühlwasser nicht als Prozesswasser verwendet wird. Bedarfsweise kann das Kühlwasser oder ein sonstiges Kühlmedium auch zum Beheizen des Stacks 1 verwendet werden.

Die mittlere Schicht 7 stellt eine poröse Transportlage dar, welche von Betriebsmedium durchströmbar ist und im Vergleich zur Schicht 6 feiner strukturiert ist. Nochmals wesentlich kleinteiliger strukturiert ist die Schicht 8, bei welcher es sich um eine zweite poröse Transportlage handelt. In den Figuren nicht erkennbare Öffnungen innerhalb der Schicht 8 sind per Laser erzeugt. Die Membran 9 liegt auf der Schicht 8 auf.

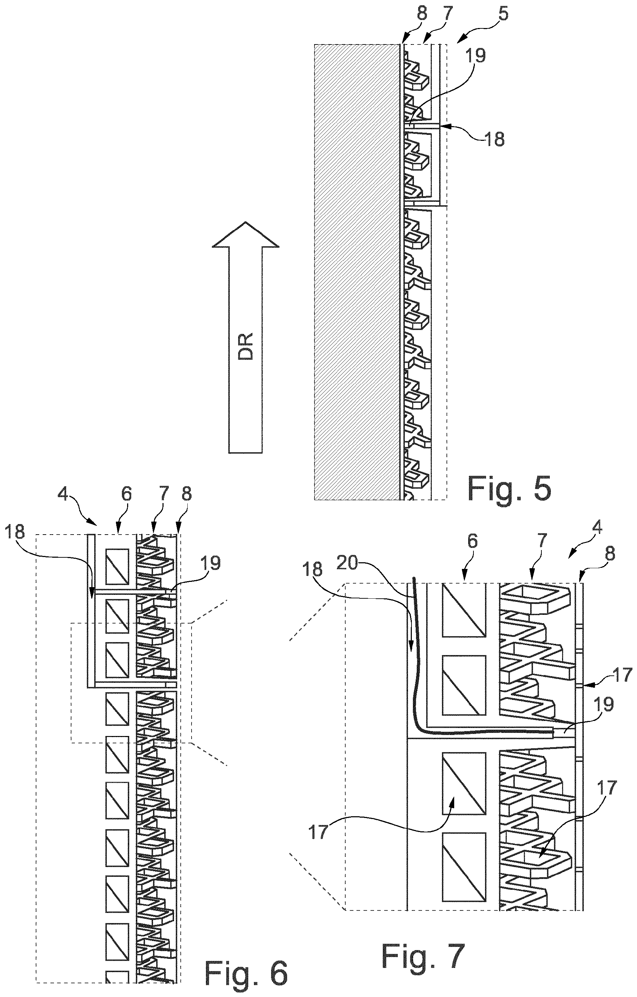

Im Rahmen des 3D-Drucks werden die Schichten 6, 7, 8 simultan erzeugt, wie aus der in den Fig. 2, 4, 5 angegebenen Druckrichtung DR ersichtlich ist. Während der additiven Fertigung wird mindestens ein Montagekanal 18 erzeugt, der mindestens zwei der Schichten 6, 7, 8 durchzieht und zur Aufnahme eines Temperatursensors 19 vorgesehen ist. In dem in Fig. 2 skizzierten Fall haben die Montagekanäle 18 jeweils eine gerade Form, wobei verschiedene mögliche Sensorpositionen eingezeichnet sind. Jeder Temperatursensor 19 ist an ein Kabel 20 angeschlossen, welches sich im Montagekanal 18 befindet. Die Breite des Montagekanals 18 ist mit B₁₈ angegeben. D₈ bezeichnet die Wandstärke der Schicht 8 im Bereich des Montagekanals 18. Wie in den Fig. 4 und 7 trotz nicht maßstäblicher Darstellung angedeutet ist, beansprucht der Montagekanal 18 innerhalb des Plattenelementes 3 nur wenig Bauraum. In dem in Fig. 4 skizzierten Fall beträgt die breite B₁₈ des Montagekanals 18 lediglich 0,8 mm und die angrenzend an diesen Montagekanal 18 gegebene Wandstärke D₈ der Schicht 8 nur 0,05 mm.

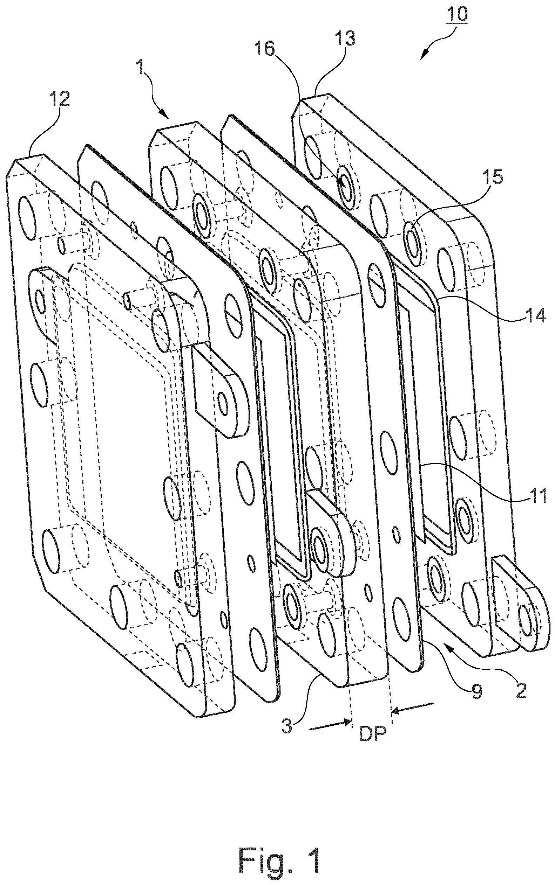

Im Ausführungsbeispiel nach den Fig. 5 bis 7 sind geknickte Formen der Montagekanäle 18 erkennbar. Auch in diesem Fall tangieren Temperatursensoren 19 die am feinsten strukturierte, an die Membran 9 grenzende Schicht 8. Damit sprechen die Temperatursensoren 19 sowohl in den Ausführungsbeispielen nach den Fig. 1 bis 4 als auch im Ausführungsbeispiel nach den Fig. 5 bis 7 sehr sensibel auf Temperaturänderungen in den elektrochemischen Zellen 2 an.

### Bezugszeichenliste

- 1: Plattenanordnung, Stack
- 2: elektrochemische Zelle
- 3: Plattenelement
- 4: Plattenteil
- 5: Plattenteil
- 6: Schicht
- 7: Schicht
- 8: Schicht
- 9: Membran
- 10: Elektrolyseur
- 11: Gasdiffusionsanlage
- 12: Endplatte
- 13: Endplatte
- 14: Dichtung
- 15: Dichtung
- 16: Port
- 17: Durchbrechung
- 18: Montagekanal
- 19: Temperatursensor
- 20: Kabel

- B18: Breite des Montagekanals
- D8: Wandstärke der Schicht 8
- DP: Dicke des Plattenelementes
- DR: Druckrichtung

## Patentansprüche

1. Plattenanordnung (1) eines Stapels elektrochemischer Zellen (2), umfassend ein zumindest teilweise als 3D-Druck-Element ausgebildetes Plattenelement (3), in welchem mehrere Schichten (6, 7, 8) parallel zueinander angeordnet sind, die jeweils durchbrochene, zur Durchleitung eines Fluids geeignete Strukturen aufweisen, wobei die Feinheit der Durchbrechungen (17) von Schicht (6, 7, 8) zu Schicht (6, 7, 8) variiert, und wobei ein Temperatursensor (19), der an ein Kabel (20) angeschlossen ist, welches durch mehrere der genannten Schichten (6, 7, 8) verläuft, an diejenige Schicht (8) grenzt, welche die feinsten Durchbrechungen (17) aufweist.

2. Plattenanordnung (1) nach Anspruch 1, **dadurch gekennzeichnet, dass** diejenige Schicht (6), welche mit der gröbsten Teilung durchbrochen ist, mindestens einen Kühlmittelkanal als Durchbrechung (17) aufweist.

3. Plattenanordnung (1) nach Anspruch 2, **dadurch gekennzeichnet, dass** zusätzlich zu der einen Kühlmittelkanal bereitstellenden Schicht (6) mindestens zwei weitere mit Durchbrechungen (17) versehene Schichten (7, 8) vorhanden sind.

4. Plattenanordnung (1) nach einem der Ansprüche 1 bis 3, **dadurch gekennzeichnet, dass** die am feinsten strukturierte Schicht (8) von einer katalytisch beschichteten Membran (9) bedeckt ist.

5. Elektrolyseur (10), umfassend eine Plattenanordnung (1) nach Anspruch 1.

6. Elektrolyseur (10) nach Anspruch 5, **dadurch gekennzeichnet, dass** dieser sowohl anodenseitig als auch kathodenseitig ein mehrschichtiges Plattenelement (3) der in Anspruch 1 angegebenen Art aufweist.

7. Elektrolyseur nach Anspruch 5 oder 6, **dadurch gekennzeichnet, dass** der mindestens eine durch die Plattenanordnung (1) nach Anspruch 1 bereitgestellte Temperatursensor (19) zur Erfassung der Temperatur eines einer elektrochemischen Zelle (2) zuzurechnenden Aktivfeldes vorgesehen ist.

8. Verfahren zur Herstellung einer Plattenanordnung (1) für einen Stapel elektrochemischer Zellen (2), wobei ein Plattenelement (3) durch ein additives Verfahren erzeugt wird, indem durchbrochene Schichten (6, 7, 8) unterschiedlicher Poren- oder Durchbrechungsgröße aufgebaut werden, wobei eine mehrere Schichten (6, 7, 8) durchziehende Ausnehmung freigehalten wird, die zur Aufnahme eines Temperatursensors (19) geeignet ist, welcher an die mit den kleinsten Poren oder Durchbrechungen versehene Schicht (8) grenzt.

9. Verfahren nach Anspruch 8, **dadurch gekennzeichnet, dass** Schichten (6, 7, 8) unterschiedlicher Poren- oder Durchbrechungsgröße simultan aufgebaut werden.

10. Verfahren nach Anspruch 8 oder 9, **dadurch gekennzeichnet, dass** Durchbrechungen in der am feinsten strukturierten Schicht (8) per Laser erzeugt werden.
